# EUROPEAN PATENT APPLICATION

(11) **EP 4 068 063 A1**
(43) Date of publication of application: **05.10.2022**
(21) Application number: 21741213.9
(22) Date of filing: 12.01.2021
(51) Int. Cl.: G06F 3/048

(54) **DATA TRANSMISSION METHOD AND MOBILE DEVICE**

(30) Priority: 16.01.2020 CN 202010048931
(71) Applicant: Huawei Technologies Co., Ltd., Shenzhen, Guangdong 518129 (CN)
(72) Inventor: TENG, Hui, Shenzhen, Guangdong 518129 (CN)
(74) Representative: Maiwald Patent- und Rechtsanwaltsgesellschaft mbH
(86) International application number: PCT/CN2021/071153
(87) International publication number: WO 2021/143655

(57) **Abstract**

This application relates to a data sending method. A first device enables a sharing function, and separately establishes a wireless connection to a second device and a third device at least through infrared and Bluetooth. A first interface of the first device displays a plurality of objects. The first device displays a second interface when detecting a first input for a first object in the plurality of objects. The second interface includes a mark indicating that the first object is selected and a plurality of options that include at least a sharing option. The first device displays a third interface including a target display region when detecting a second input for the sharing option. The sharing target display region includes two types of display regions, a first type of display region is used to display a device identifier that remains an infrared connection to the first device, and a second type of display region is used to display a device identifier that remains a Bluetooth connection to the first device. The first device sends the first object to the second device when detecting a third input for a first device identifier in the first type of display region. The technical solutions of this application can implement quick positioning, facilitate an operation, and improve user experience.

## Description

This application claims priority to Chinese Patent Application No. 202010048931.4, filed with the China National Intellectual Property Administration on January 16, 2020 and entitled "DATA SENDING METHOD AND MOBILE DEVICE", which is incorporated in this application by reference in its entirety.

### TECHNICAL FIELD

This application relates to wireless transmission technologies, and in particular, to a data sending method and a mobile device.

### BACKGROUND

A data sharing technology can enable a user to implement data sharing between different devices, and is widely applied. However, in an existing data sharing technology, a peripheral device is discovered based on a broadcast mechanism, and an identifier of the discovered peripheral device is displayed. After selecting a target device identifier, the user sends data to a target device. When there are a plurality of peripheral device identifiers and one interface cannot display all the identifiers, the user needs to browse the identifiers one by one for searching. In addition, when the peripheral device identifiers include a plurality of device identifiers that are the same as or similar to the target device identifier, the user needs to spend much time and energy and even needs other assistance information to position the target device. Therefore, a data sending method needs to be provided for conveniently positioning a target device.

### SUMMARY

To resolve the foregoing technical problem in the conventional technology, this application provides a data sending method and a mobile device for conveniently positioning a target device.

According to a first aspect, a data sending method is provided. The method is applied to a first device, and includes: The first device enables a sharing function. The first device establishes a wireless connection to a second device at least through infrared. The first device establishes a wireless connection to a third device at least through Bluetooth. A plurality of objects are displayed on a first interface of the first device. The object includes at least one of a document, a photo, a folder, a video file, an audio file, an application, or text content. The first device displays a second interface when detecting a first input for a first object in the plurality of objects. The second interface includes a mark indicating that the first object is selected and a plurality of options that include at least a sharing option. The first device displays a third interface when detecting a second input for the sharing option. The third interface includes a sharing target display region, the sharing target display region includes two types of display regions, a first type of display region is used to display a device identifier that remains an infrared connection to the first device, and a second type of display region is used to display a device identifier that remains a Bluetooth connection to the first device. The first device sends the first object to the second device when the first device detects a third input for a first device identifier in the first type of display region. In this way, when a user of the first device expects to send data of the first device to the second device around the first device, the user only needs to make the first device that enables the sharing function face towards the second device. A second device identifier is displayed in the first type of display region, implying that the second device enables a sharing function. Because a first display manner is different from a second display manner, the user of the first device can quickly identify the second device identifier through distinguishing on the third interface of the first device, so as to conveniently send the data from the first device to the second device. The user of the first device can perform quick positioning without one-by-one browsing for searching. This facilitates a user operation of the first device, improves user experience, and does not affect data sending from the first device to the third device.

According to the first aspect, that the first device sends the first object to the second device includes: The first device sends the first object to the second device through Wi-Fi. In this way, the first device can quickly send the first object to the second device.

According to the first aspect or any implementation of the first aspect, a display manner of the first type of display region is different from a display manner of the second type of display region, and an area of the second type of display region is greater than an area of the first type of display region. In this way, the user of the first device can quickly identify the first type of display region, so as to quickly identify a device identifier displayed in the first type of display region, thereby facilitating subsequent data sending.

According to the first aspect or any implementation of the first aspect, after the first device rotates by a specific angle, the first device faces towards the third device, content in the first type of display region is updated, and content in the second type of display region is updated; and the first device establishes a wireless connection to the third device through infrared, and the first device establishes a wireless connection to the second device through Bluetooth. In this way, by using a directional feature of infrared, when an orientation of the first device changes, the first type of display region and the second type of display region are correspondingly updated, so that the user of the first device can conveniently and quickly position, by adjusting the orientation of the first device, a device to which the data is expected to be sent.

According to the first aspect or any implementation of the first aspect, that content in the first type of display region is updated, and content in the second type of display region is updated includes: The first type of display region displays an identifier of the third device but does not display an identifier of the second device; and the second type of display region displays the identifier of the second device. In this way, after the orientation of the first device changes, it is determined that the first type of display region and the second type of display region correspondingly change.

According to the first aspect or any implementation of the first aspect, after the first device rotates by a specific angle, the first device faces towards the third device, content in the first type of display region is updated, and content in the second type of display region remains unchanged; and the first device establishes a wireless connection to the third device through infrared, and the first device separately remains a wireless connection to the second device and the third device through Bluetooth. In this way, when the orientation of the first device changes, the content in the second type of display region remains unchanged, and only the content in the first type of display region is updated. The user of the first device can conveniently and quickly identify, through the updated first type of display region, a device identifier displayed in the updated first type of display region, thereby facilitating subsequent data sending.

According to the first aspect or any implementation of the first aspect, that content in the first type of display region is updated, and content in the second type of display region remains unchanged includes: The first type of display region displays an identifier of the third device but does not display an identifier of the second device; and the second type of display region displays the identifier of the second device and the identifier of the third device. In this way, after the orientation of the first device changes, it is determined that the content in the first type of display region correspondingly changes, and the content in the second type display region does not change.

According to the first aspect or any implementation of the first aspect, after the first device rotates by a specific angle, the first device does not face towards any device, content in the first type of display region is updated, and content in the second type of display region remains unchanged; and the first device separately remains a wireless connection to the second device and the third device through Bluetooth. In this way, the user of the first device can conveniently and quickly obtain, through the updated first type of display region, information indicating whether the first device can establish or remain a wireless connection to any device through infrared.

According to the first aspect or any implementation of the first aspect, that content in the first type of display region is updated, and content in the second type of display region remains unchanged includes: The first type of display region does not display an identifier of any device; and the second type of display region displays an identifier of the second device and an identifier of the third device. In this way, the user of the first device can conveniently and quickly learn, through the updated first type of display region, that the first device cannot establish or remain a wireless connection to any device through infrared in the current orientation of the first device.

According to the first aspect or any implementation of the first aspect, a location of the first type of display region on the third interface is fixed; and a location of the second type of display region on the third interface is fixed. In this way, it is convenient for the user of the first device to perform viewing and positioning.

According to the first aspect or any implementation of the first aspect, after the first device enables the sharing function, the first device automatically enables infrared, Bluetooth, and Wi-Fi. In this way, it is further determined that infrared, Bluetooth, and Wi-Fi are automatically enabled when the sharing function is enabled, so that a relationship between the sharing function, infrared, Bluetooth, and Wi-Fi is determined.

According to a second aspect, a data sending method is provided. The method is applied to a first device, a second device, and a third device, and includes: The first device, the second device, and the third device each enable a sharing function. The first device establishes a wireless connection to the second device at least through infrared. The first device establishes a wireless connection to the third device at least through Bluetooth. A plurality of objects are displayed on a first interface of the first device. The object includes at least one of a document, a photo, a folder, a video file, an audio file, an application, or text content. The first device displays a second interface when detecting a first input for a first object in the plurality of objects. The second interface includes a mark indicating that the first object is selected and a plurality of options that include at least a sharing option. The first device displays a third interface when detecting a second input for the sharing option. The third interface includes a sharing target display region, the sharing target display region includes two types of display regions, a first type of display region is used to display a device identifier that remains an infrared connection to the first device, and a second type of display region is used to display a device identifier that remains a Bluetooth connection to the first device. The first device sends the first object to the second device when the first device detects a third input for a first device identifier in the first type of display region. An interface of the second device displays a first option and a second option. The first option is used to indicate to agree to receive sharing, and the second option is used to indicate to disagree to receive sharing. After the second device detects an input for the first option, the second device receives the first object. In this way, when a user of the first device expects to send data of the first device to the second device around the first device, the user only needs to make the first device that enables the sharing function face towards the second device. Because a first display manner is different from a second display manner, the user of the first device can quickly identify a second device identifier through distinguishing on the third interface of the first device, so as to conveniently send the data from the first device to the second device. The user of the first device can perform quick positioning without one-by-one browsing for searching. This facilitates a user operation of the first device, improves user experience, and does not affect data sending from the first device to the third device.

According to the second aspect, that the first device sends the first object to the second device includes: The first device sends the first object to the second device through Wi-Fi. In this way, the first device can quickly send the first object to the second device.

According to the second aspect or any implementation of the second aspect, a display manner of the first type of display region is different from a display manner of the second type of display region, and an area of the second type of display region is greater than an area of the first type of display region. In this way, the user of the first device can quickly identify the first type of display region, so as to quickly identify a device identifier displayed in the first type of display region, thereby facilitating subsequent data sending.

According to the second aspect or any implementation of the second aspect, after the first device rotates by a specific angle, the first device faces towards the third device, content in the first type of display region is updated, and content in the second type of display region is updated; and the first device establishes a wireless connection to the third device through infrared, and the first device establishes a wireless connection to the second device through Bluetooth. In this way, by using a directional feature of infrared, when an orientation of the first device changes, the first type of display region and the second type of display region are correspondingly updated, so that the user of the first device can conveniently and quickly position, by adjusting the orientation of the first device, a device to which the data is expected to be sent.

According to the second aspect or any implementation of the second aspect, that content in the first type of display region is updated, and content in the second type of display region is updated includes: The first type of display region displays an identifier of the third device but does not display an identifier of the second device; and the second type of display region displays the identifier of the second device.

According to the second aspect or any implementation of the second aspect, after the first device rotates by a specific angle, the first device faces towards the third device, content in the first type of display region is updated, and content in the second type of display region remains unchanged; and the first device establishes a wireless connection to the third device through infrared, and the first device separately remains a wireless connection to the second device and the third device through Bluetooth. In this way, the user of the first device can conveniently and quickly identify, through the updated first type of display region, a device identifier displayed in the updated first type of display region, thereby facilitating subsequent data sending.

According to the second aspect or any implementation of the second aspect, that content in the first type of display region is updated, and content in the second type of display region remains unchanged includes: The first type of display region displays an identifier of the third device but does not display an identifier of the second device; and the second type of display region displays the identifier of the second device and the identifier of the third device. In this way, after the orientation of the first device changes, it is determined that the first type of display region and the second type of display region correspondingly change.

According to the second aspect or any implementation of the second aspect, after the first device rotates by a specific angle, the first device does not face towards any device, content in the first type of display region is updated, and content in the second type of display region remains unchanged; and the first device separately remains a wireless connection to the second device and the third device through Bluetooth. In this way, the user of the first device can conveniently and quickly obtain, through the updated first type of display region, information indicating whether the first device can establish or remain a wireless connection to any device through infrared.

According to the second aspect or any implementation of the second aspect, that content in the first type of display region is updated, and content in the second type of display region remains unchanged includes: The first type of display region does not display an identifier of any device; and the second type of display region displays an identifier of the second device and an identifier of the third device. In this way, the user of the first device can conveniently and quickly learn, through the updated first type of display region, that the first device cannot establish or remain a wireless connection to any device through infrared in the current orientation of the first device.

According to the second aspect or any implementation of the second aspect, a location of the first type of display region on the third interface is fixed; and a location of the second type of display region on the third interface is fixed. In this way, it is convenient for the user of the first device to perform viewing and positioning.

According to the second aspect or any implementation of the second aspect, after the first device enables the sharing function, the first device automatically enables infrared, Bluetooth, and Wi-Fi. In this way, a relationship between the sharing function, infrared, Bluetooth, and Wi-Fi is further determined.

According to a third aspect, a mobile device is provided, including at least a memory, a touchscreen, one or more processors, and one or more computer programs. The one or more computer programs are stored in the memory, and when the one or more processors execute the one or more computer programs, the mobile device is enabled to implement the data sending method according to any one of the first aspect and the implementations of the first aspect or according to any one of the second aspect and the implementations of the second aspect.

In addition, for implementations of the third aspect and corresponding technical effects, refer to the implementations of the first aspect and the corresponding technical effects or the implementations of the second aspect and the corresponding technical effects. Details are not described herein again.

According to a fourth aspect, a computer-readable storage medium is provided, including instructions. When the instructions are run on the mobile device according to the third aspect, the mobile device is enabled to perform the data sending method according to any one of the first aspect and the implementations of the first aspect or according to any one of the second aspect and the implementations of the second aspect.

In addition, for implementations of the fourth aspect and corresponding technical effects, refer to the implementations of the first aspect and the corresponding technical effects or the implementations of the second aspect and the corresponding technical effects. Details are not described herein again.

The sharing function in any one of the first aspect, the second aspect, the third aspect, the fourth aspect, and the implementations thereof means first establishing a connection through infrared and/or Bluetooth, transmitting a Wi-Fi connection parameter through the infrared and/or Bluetooth connection, and then quickly transmitting data based on an established Wi-Fi connection. The sharing function may also be referred to as a moment sharing function or a quick sharing function.

### BRIEF DESCRIPTION OF DRAWINGS

To describe the technical solutions in the conventional technology and embodiments of this application more clearly, the following briefly describes the accompanying drawings required in the conventional technology and embodiments of this application. It is clear that the accompanying drawings in the following descriptions involve some embodiments of the present invention, and persons of ordinary skill in the art may still derive other drawings from these accompanying drawings without creative efforts.
FIG. 1 is a schematic diagram of a structure of a mobile device according to an embodiment of this application;
FIG. 2a to FIG. 2f are schematic diagrams of user interfaces displayed when a mobile device quickly sends data;
FIG. 3 is a schematic diagram of a scenario of a data sending method according to an embodiment of this application;
FIG. 4a to FIG. 4f are schematic diagrams of user interfaces of a data sending method according to an embodiment of this application;
FIG. 5a to FIG. 5c are schematic diagrams of user interfaces of a data sending method according to an embodiment of this application;
FIG. 6 is a schematic diagram of a software structure of a data sending method according to an embodiment of this application;
FIG. 7a and FIG. 7b are schematic flowcharts of a data sending method according to an embodiment of this application; and
FIG. 8 is a schematic diagram of a structure of a mobile device according to an embodiment of this application.

### DESCRIPTION OF EMBODIMENTS

The following clearly and completely describes the technical solutions in embodiments of the present invention with reference to the accompanying drawings. It is clear that the described embodiments are merely some rather than all of embodiments of this application. All other embodiments obtained by persons of ordinary skill in the art based on embodiments of this application without creative efforts shall fall within the protection scope of the present invention.

Terms used in the following embodiments of this application are only intended to describe particular embodiments, and are not intended to limit this application. Terms "one", "a", "the", "the foregoing", "this", and "the one" of singular forms used in this specification and the appended claims of this application are also intended to include plural forms, unless otherwise specified in the context clearly. It should be further understood that, a term "and/or" used in this application indicates and includes any one or all of possible combinations of one or more listed items. In this application, "establishing a wireless connection through infrared" and "establishing a wireless connection through Bluetooth" respectively mean establishing a wireless connection through an infrared standard and establishing a wireless connection through a Bluetooth standard.

The following describes a mobile device, a user interface used for the mobile device, and embodiments for using the mobile device. In some embodiments, the mobile device may be a portable mobile device further including another function such as a personal digital assistant and/or a music player function, for example, a mobile phone, a tablet computer, or a wearable mobile device (such as a smartwatch or a smart band) having a wireless communication function. An example embodiment of the portable mobile device includes but is not limited to a portable mobile device running on iOS^{®}, Android^{®}, Microsoft^{®}, or another operating system. The portable mobile device may alternatively be another portable mobile device, for example, a laptop (Laptop) having a touch-sensitive surface or a touch panel. It should be further understood that, in some other embodiments, the mobile device may alternatively not be a portable mobile device, but a desktop computer having a touch-sensitive surface or a touch panel.

A term "user interface (user interface, UI) " in this specification, the claims, and the accompanying drawings of this application is a medium interface for interaction and information exchange between a user and an application or an operating system, and the interface implements conversion between an internal form of information and a form that can be accepted by the user. A user interface of an application is source code written in a specific computer language such as Java or an extensible markup language (extensible markup language, XML). The interface source code is parsed and rendered on the mobile device, and is finally presented as content that can be identified by the user, for example, a control such as a photo, a text, or a button. A control (control) is also referred to as a widget (widget), and is a basic element of a user interface. Typical controls include a toolbar (toolbar), a menu bar (menu bar), a text box (text box), a button (button), a scrollbar (scrollbar), a photo, and a text. An attribute and content of a control on an interface are defined by using a tag or a node. For example, XML defines a control on the interface by using a node such as <Textview>, <ImgView>, or <VideoView>. One node corresponds to one control or attribute on the interface. After being parsed and rendered, the node is presented as user-visible content. In addition, interfaces of a plurality of applications such as a hybrid application (hybrid application) usually further include a web page. The web page, also referred to as a page, may be understood as a special control that is embedded in an interface of an application. The web page is source code written in a specific computer language, for example, a hypertext markup language (hypertext markup language, HTML), cascading style sheets (cascading style sheets, CSS), or JavaScript (JavaScript, JS). A browser or a web page display component whose function is similar to that of a browser may load and display the web page source code as content that can be identified by the user. Specific content included in the web page is also defined by using a tag or a node in the web page source code. For example, HTML defines an element and an attribute of the web page by using <p>, <img>, <video>, or <canvas>.

The user interface is usually represented in a form of a graphical user interface (graphical user interface, GUI), and is a user interface that is related to a computer operation and that is displayed in a graphic manner. The user interface may be an interface element displayed on a display of the mobile device such as an icon, a window, or a control. The control may include a visual interface element such as an icon, a button, a menu, a tab, a text box, a dialog box, a status bar, a navigation bar, or a widget.

In the following embodiments of this application, "Moment Share (Moment Share)" of the mobile device such as a smartphone may be a service or a function provided by the mobile device, and may support the mobile device in transmitting data to another device. In some embodiments, "Moment Share" may support the mobile device in transmitting data to a nearby device by using one or more technologies such as Bluetooth, infrared, wireless fidelity direct (wireless fidelity direct, Wi-Fi direct), and a Wi-Fi software access point (software access point, SoftAP). In some other embodiments, "Moment Share" may support the mobile device in transmitting, through a local area network (LAN), data to a device (for example, another mobile device) that is located in a same local area network as the mobile device. In some embodiments of this application, a device that is located in a same local area network as the mobile device may alternatively be a device near the mobile device. In some embodiments, "Moment Share" may support the mobile device in transmitting, by using a wide area network (wide area network, WAN) technology or a cellular mobile communications technology such as 3G, LTE, or 5G, data to a cloud device that can be accessed by the mobile device. It may be understood that the nearby device and the cloud device are merely relative concepts. The cloud device is a device discovered by the mobile device by using a cellular mobile communications technology or a wide area network communications technology. The nearby device is a device discovered by the mobile device by using one or more technologies such as Bluetooth, infrared, Wi-Fi direct (such as Wi-Fi P2P), Wi-Fi SoftAP, and Wi-Fi LAN.

In this application, enabling "Moment Share" may include enabling one or more of a Bluetooth module, an infrared module, a Wi-Fi module, and a mobile communications module of the mobile device. In some embodiments, after enabling the foregoing function, the mobile device may discover a device near the mobile device by using one or more technologies such as Bluetooth, infrared, Wi-Fi direct (such as Wi-Fi P2P), Wi-Fi SoftAP, and Wi-Fi LAN.

It may be understood that "Moment Share" or "Moment Share" is merely a word used in embodiments, a meaning has been recorded in embodiments, and an identifier does not constitute any limitation on embodiments. In addition, in some other embodiments of this application, "Moment Share" may also be referred to as another noun such as "Short-distance Share". Similarly, "Moment Share" mentioned in embodiments of this application may also be referred to as another name such as "Shoot Share" in some other embodiments.

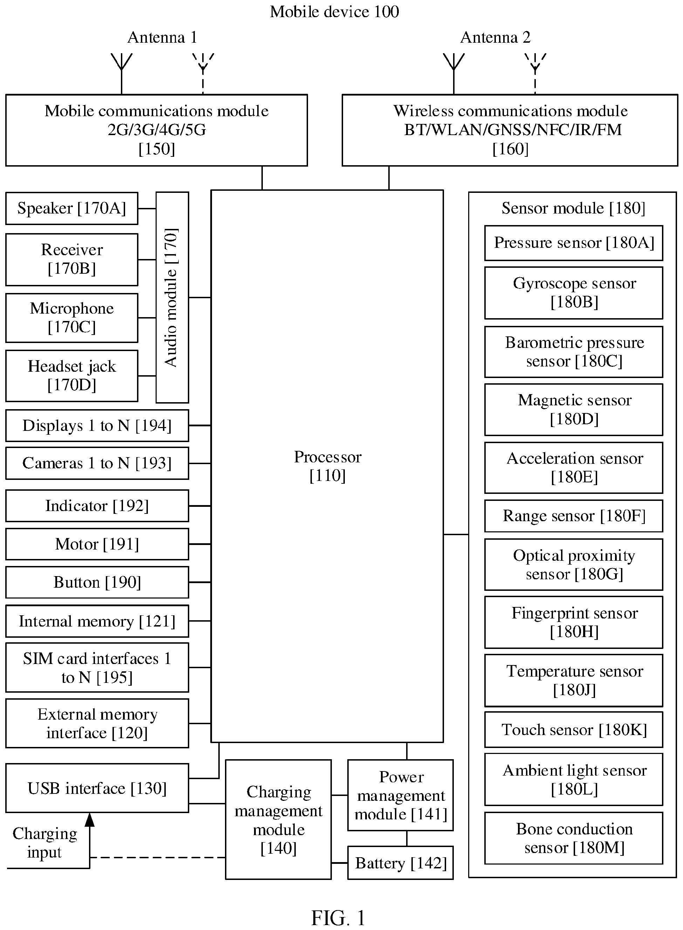

A method provided in embodiments of this application is applicable to a mobile device 100 shown in FIG. 1. FIG. 1 is a schematic diagram of a structure of the mobile device 100.

The mobile device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile device 100. In some other embodiments of this application, the mobile device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent components, or may be integrated into one or more processors.

The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The power management module 141 is configured to connect the battery 142 and the charging management module 140 to the processor 110. A wireless communication function of the mobile device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the mobile device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 150 can provide a solution, applied to the mobile device 100, to wireless communication including 2G, 3G, 4G, 5G, and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert an amplified signal into an electromagnetic wave for radiation through the antenna 1. In some embodiments, at least some function modules in the mobile communications module 150 may be disposed in the processor 110. In some embodiments, at least some function modules in the mobile communications module 150 may be disposed in a same device as at least some modules in the processor 110.

The wireless communications module 160 may provide a solution, applied to the mobile device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

In some embodiments, in the mobile device 100, the antenna 1 and the mobile communications module 150 are coupled, and the antenna 2 and the wireless communications module 160 are coupled, so that the mobile device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, Wi-Fi, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile device 100 may include one or N displays 194, where N is a positive integer greater than 1.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created when the mobile device 100 is used. In addition, the internal memory 121 may include a high-speed random access memory, or may include a nonvolatile memory such as at least one disk storage device, a flash memory, or a universal flash storage (universal flash storage, UFS). The processor 110 runs the instructions stored in the internal memory 121 and/or the instructions stored in the memory disposed in the processor, to perform various function applications of the mobile device 100 and data processing.

The mobile device 100 may implement an audio function such as music playing or recording by using the audio module 170, the speaker 170A, the receiver 170B, the microphone 170C, the headset jack 170D, the application processor, and the like.

The pressure sensor 180A is configured to sense a pressure signal, and can convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The mobile device 100 determines pressure strength based on the change of the capacitance. When a touch operation is performed on the display 194, the mobile device 100 detects strength of the touch operation by using the pressure sensor 180A. The mobile device 100 may also calculate a touch location based on a detection signal of the pressure sensor 180A. In some embodiments, touch operations that are performed at a same touch location but have different touch operation strength may correspond to different operation instructions. For example, when a touch operation whose touch operation strength is less than a first pressure threshold is performed on an icon of Messages, an instruction for viewing an SMS message is performed. When a touch operation whose touch operation strength is greater than or equal to the first pressure threshold is performed on the icon of Messages, an instruction for creating a new SMS message is performed.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor 180K. The touch sensor may transfer the detected touch operation to the application processor to determine a type of the touch event. The display 194 may provide a visual output related to the touch operation. In some other embodiments, the touch sensor 180K may alternatively be disposed on a surface of the mobile device 100 at a location different from that of the display 194.

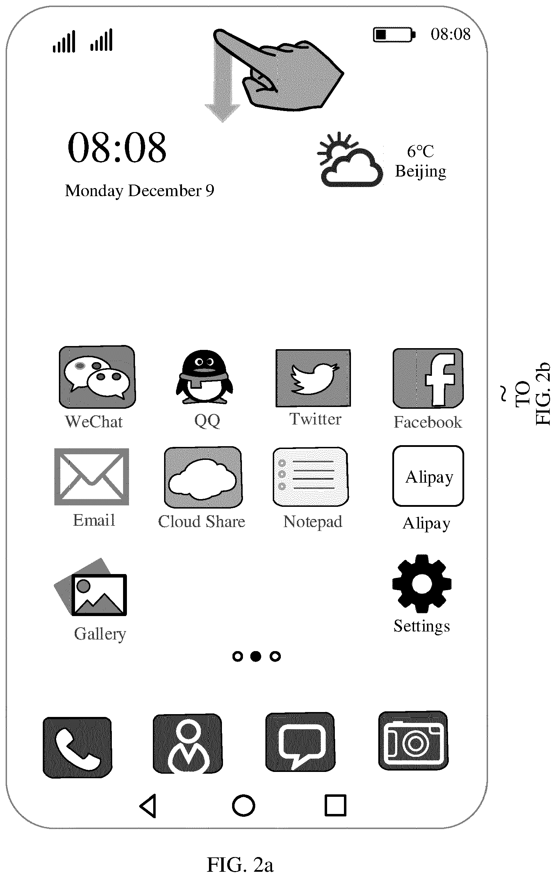

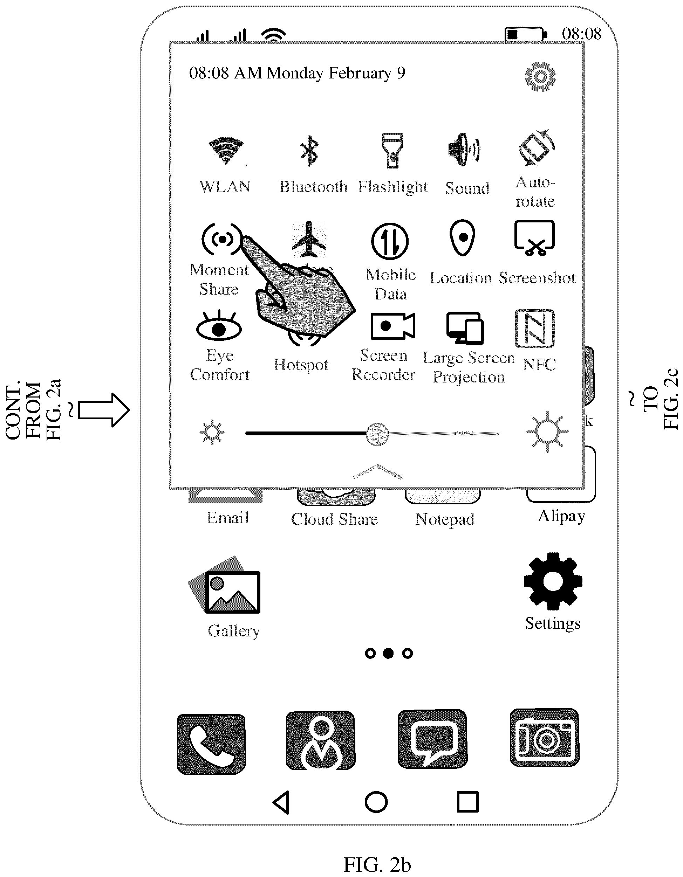

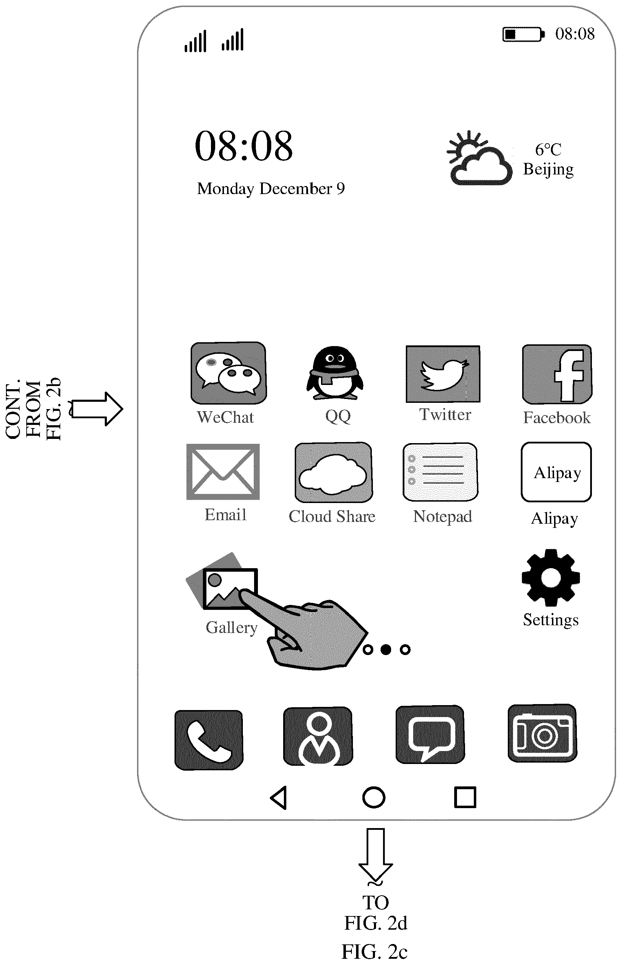

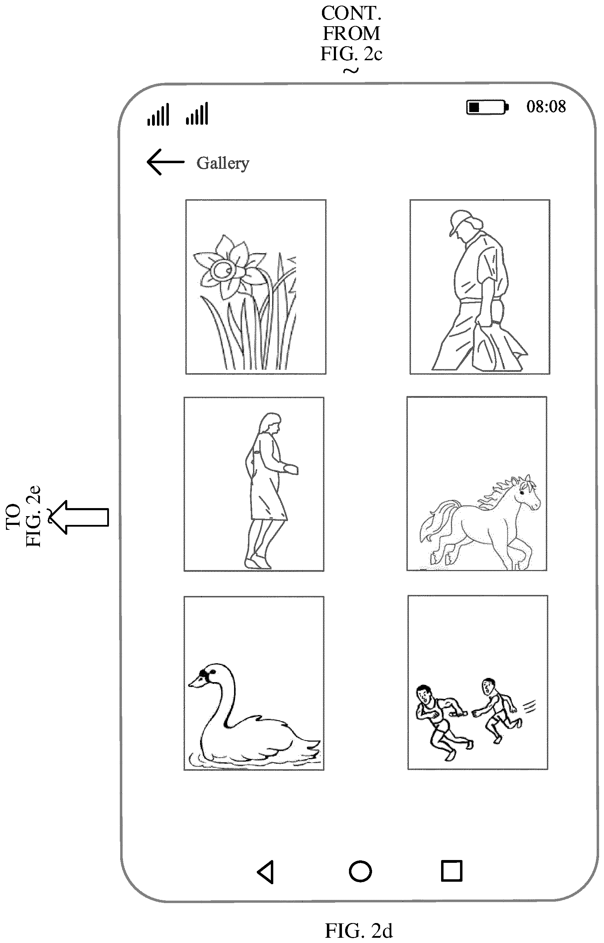

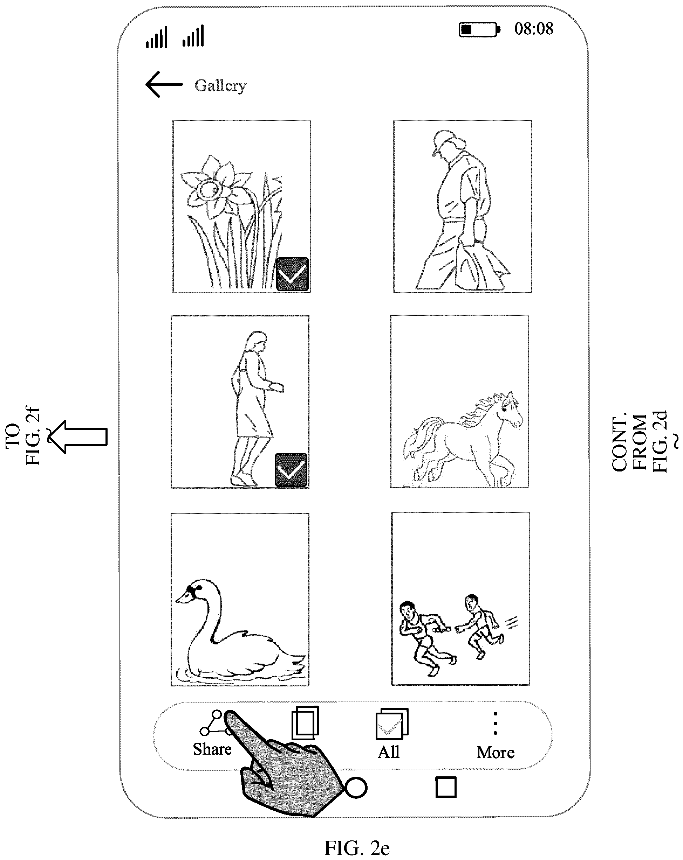

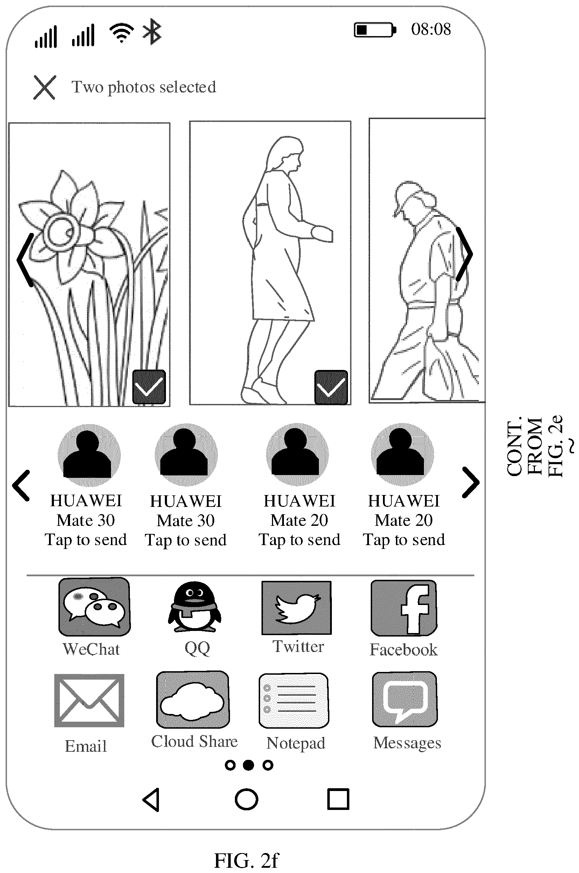

FIG. 2a to FIG. 2f show user interfaces displayed when a mobile device quickly shares data. An example of quickly sharing a photo is used below for description. On a user interface shown in FIG. 2a, when detecting a gesture of sliding downward from the top of the mobile device, in response to the gesture, the mobile device switches from the user interface shown in FIG. 2a to a user interface shown in FIG. 2b. As shown in FIG. 2b, in an initial state, a "Moment Share" control is in an off state. When detecting an operation on the "Moment Share" control in FIG. 2b (for example, a touch operation on the "Moment Share" control), in response to the operation, the mobile device enables "Moment Share". A manner of enabling "Moment Share" is not limited to the foregoing manner. Alternatively, a user may enable "Moment Share" when selecting data (such as a photo, a document, or a web page) for sharing. Details are not described herein again. In some embodiments, a dialog box pops up before "Moment Share" is enabled, to notify whether to agree to enable both Bluetooth and Wi-Fi for enabling "Moment Share". If yes, "Moment Share" is enabled. If no, "Moment Share" is not enabled. In some embodiments, no dialog box pops up before "Moment Share" is enabled. In other words, the user is not queried whether to agree to enable both Bluetooth and Wi-Fi. When it is detected that "Moment Share" is enabled, Bluetooth and Wi-Fi are automatically enabled. Then, on a user interface shown in FIG. 2c, when detecting an operation on a "Gallery" icon (for example, a tap operation on the "Gallery" icon), the mobile device enters a user interface shown in FIG. 2d. When it is detected that a photo on the user interface shown in FIG. 2d is selected, a black square embedded with a tick mark is displayed on a lower right corner of the selected photo, and a control bar including a "Share" control is displayed below all photos. In this case, an interface is shown in FIG. 2e. As shown in FIG. 2e, it is detected that two photos are selected. Then, after detecting an operation on the "Share" control (for example, a touch operation on the "Share" control), the mobile device enters a user interface shown in FIG. 2f. On the user interface shown in FIG. 2f, a peripheral device identifier discovered through "Moment Share" is displayed. On the user interface shown in FIG. 2f, when it is detected that a peripheral device identifier is selected, and acceptance is detected on a user interface of the peripheral device (not shown in FIG. 2a to FIG. 2f), the two photos are sent to a selected peripheral device.

However, in this process, when there are a plurality of peripheral device identifiers and one interface cannot display all the peripheral device identifiers, the user needs to browse the peripheral device identifiers one by one to search for a target device. This occupies a large amount of energy of the user, brings inconvenience to the user, and causes poor user experience. In addition, if the plurality of peripheral device identifiers are the same or similar, the user cannot or cannot easily accurately determine the target device from a plurality of peripheral devices with the same or similar identifiers based on only an identifier of the mobile device. For example, the peripheral devices include HUAWEI Mate 30 of A, HUAWEI Mate 30 of B, HUAWEI Mate 20 of C, HUAWEI Mate 20 of D, and HUAWEI Mate 30 of E, and the target device is HUAWEI Mate 30 of A. On the user interface shown in FIG. 2f, the peripheral device identifiers include three same identifiers "HUAWEI Mate 30" and two same identifiers "HUAWEI Mate 20". The user needs to spend much time and energy and even needs other assistance information to accurately identify the target device and send data to the target device, for example, needs to first disable "Moment Share" of HUAWEI Mate 30 of B and E or first modify the device identifier of HUAWEI Mate 30 of A. In addition, because the identifiers of HUAWEI Mate 20 and HUAWEI Mate 30 are similar, the user is likely to confuse HUAWEI Mate 20 with HUAWEI Mate 30, and mistakes HUAWEI Mate 20 of C and D for HUAWEI Mate 30 of A. Consequently, a sharing error and information leakage are caused. In addition, even if the user modifies a device identifier, a device identifier obtained through modification by the user may also be the same as or similar to an identifier of the target device, and the user cannot accurately identify the target device.

Consequently, much time and energy of the user are consumed, the target device is likely to be confused, an information leakage risk is relatively high, a user operation is inconvenient, and experience is relatively poor. An embodiment of this application provides a data sending method for conveniently positioning a target device, so that the target device is not likely to be confused, an information leakage risk is greatly reduced, a user operation is convenient, and experience is relatively good.

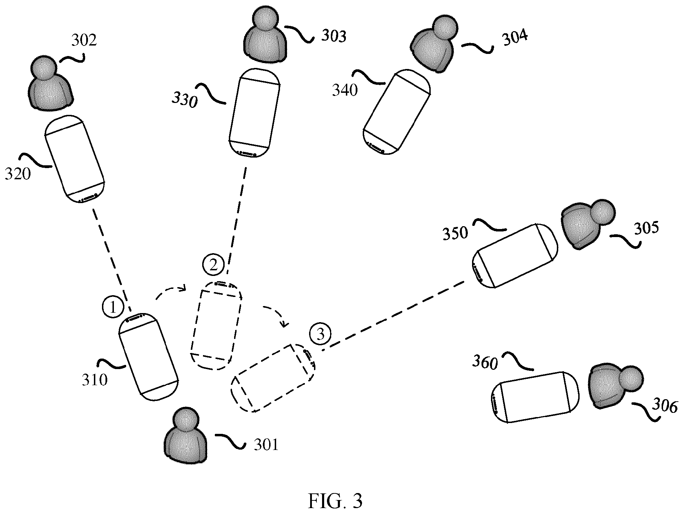

FIG. 3 is a schematic diagram of a scenario of a data sending method for conveniently positioning a target device according to an embodiment of this application. As shown in FIG. 3, a user 301 holds a first device 310, there are users 302, 303, 304, 305, and 306 around the user 301, and the users 302, 303, 304, 305, and 306 respectively hold devices 320, 330, 340, 350, and 360. The devices 320, 330, 340, 350, and 360 may be differently classified. For example, the devices 320 and 330 are second devices, and the devices 340, 350, and 360 are third devices; or the devices 320, 330, and 340 are second devices, and the devices 350 and 360 are third devices. For simplicity, an example in which the device 320 is a second device and the devices 330, 340, 350, and 360 are third devices is used below for description. In other words, peripheral devices of the first device 310 include the second device 320 and the third devices 330, 340, 350, and 360. There is no obstruction between the first device 310 and the second device 320, and between the first device 310 and any one of the third devices 330, 340, 350, and 360. The first device 310, the second device 320, and the third devices 330, 340, 350, and 360 each may implement a "Moment Share" function. The user 301 sends data on the first device 310 to any one of the second device 320 and the third devices 330, 340, 350, and 360 by using the first device 310. All the first device 310, the second device 320, and the third devices 330, 340, 350, and 360 enable "Moment Share". The first device 310 discovers the second device 320 and the third devices 330, 340, 350, and 360 through "Moment Share". The user 301 selects the data on the first device 310 by performing a touch operation on a touchscreen of the first device 310. In response to the foregoing operation, the user 301 selects an identifier of the second device 320 on the first device 310, and the user 302 accepts or agrees with the touch operation on the second device 320. In this way, the data on the first device 310 is quickly sent to the second device 320. The foregoing touch operation is merely an example, and there may alternatively be another operation, for example, a corresponding operation performed through a voice input.

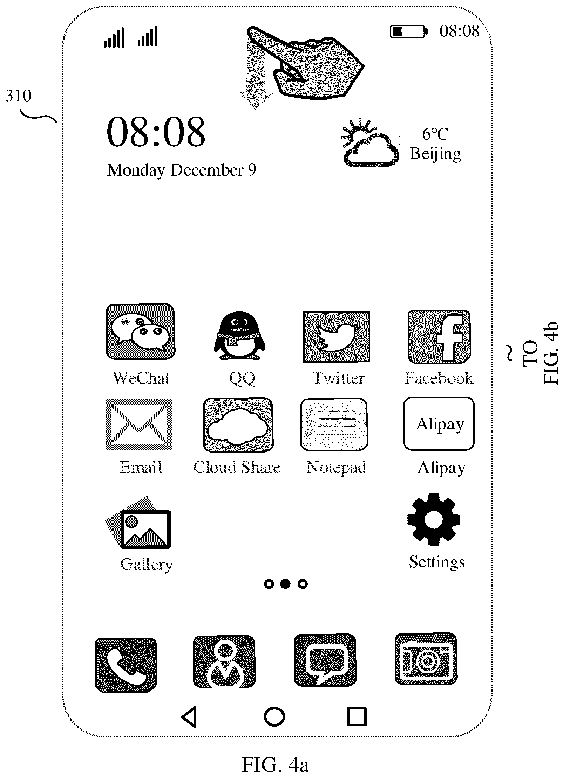

FIG. 4a to FIG. 4f show user interfaces of a data sending method for conveniently positioning a target device according to an embodiment of this application. For ease of description, an example in which the first device 310, the second device 320, and the third devices 330, 340, 350, and 360 are respectively HUAWEI Mate 30, HUAWEI Mate 30, HUAWEI Mate 20, HUAWEI Mate 20, HUAWEI Mate 30, and HUAWEI Mate 30 and the first device quickly sends a photo on the first device to the second device is used. In this case, the first device 310, the second device 320, and the third devices 330, 340, 350, and 360 each are provided with infrared, and each can enable a "Moment Share" function. In this embodiment of this application, infrared is enabled when "Moment Share" is enabled, and infrared is disabled when "Moment Share" is disabled. In some embodiments, a dialog box pops up before "Moment Share" is enabled, to notify whether to agree to enable all of infrared, Bluetooth, and Wi-Fi for enabling "Moment Share". If yes, "Moment Share" is enabled. If no, "Moment Share" is not enabled. In some embodiments, no dialog box pops up before "Moment Share" is enabled. In other words, the user is not queried whether to agree to enable all of infrared, Bluetooth, and Wi-Fi. When it is detected that "Moment Share" is enabled, infrared, Bluetooth, and Wi-Fi are automatically enabled. There is no obstruction between the first device 310 and the second device 320, and between the first device 310 and any one of the third devices 330, 340, 350, and 360. The following describes detailed steps in this embodiment of this application in detail with reference to FIG. 4a to FIG. 4f.

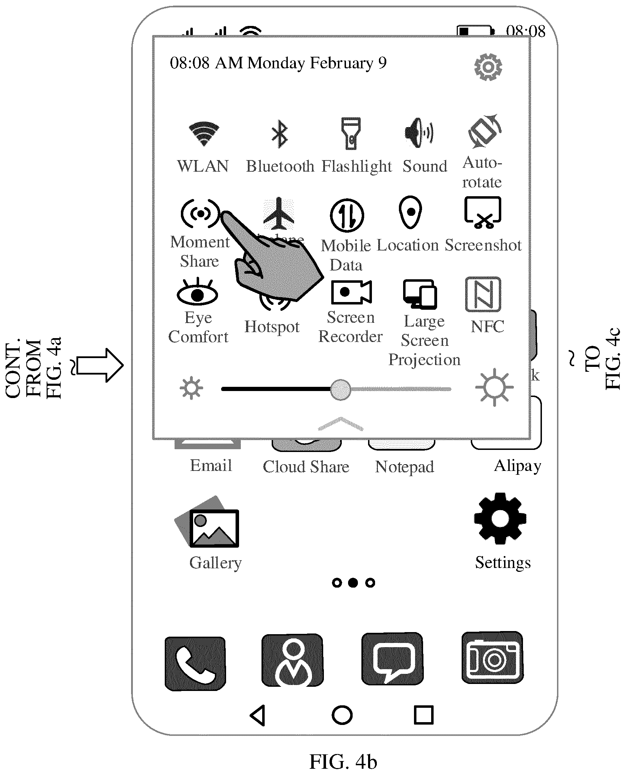

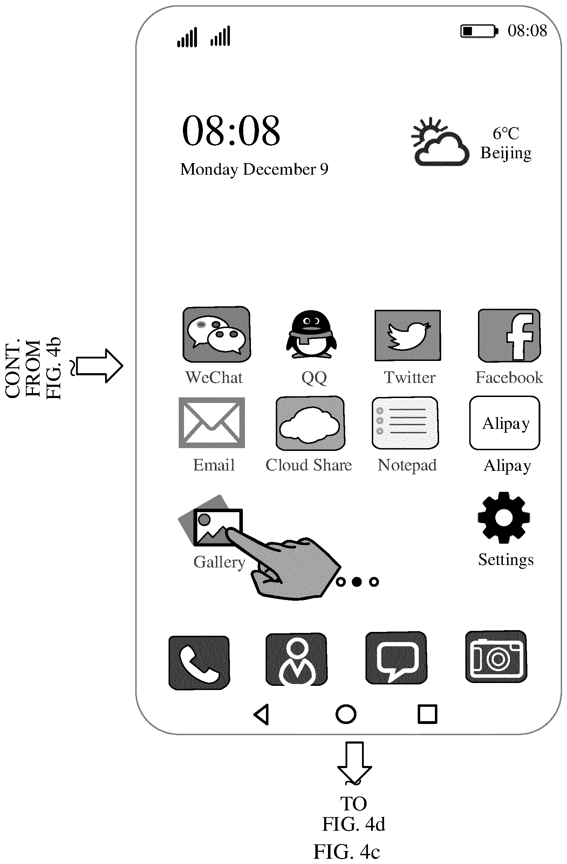

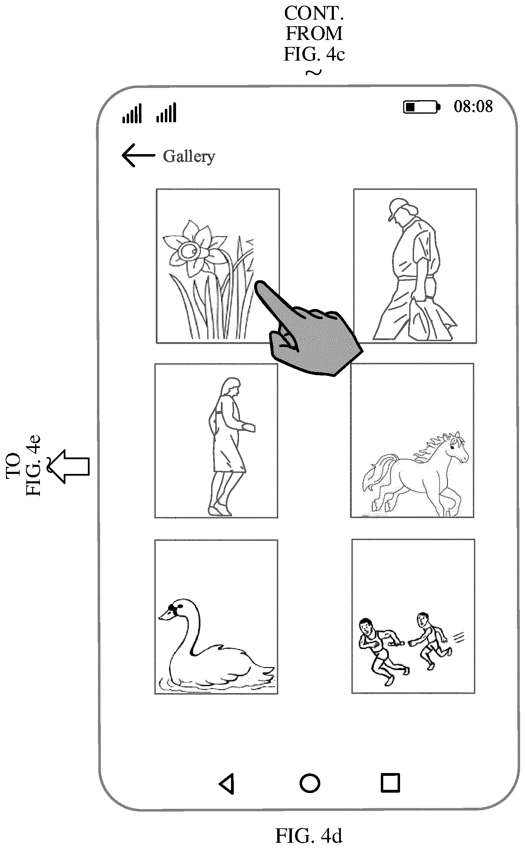

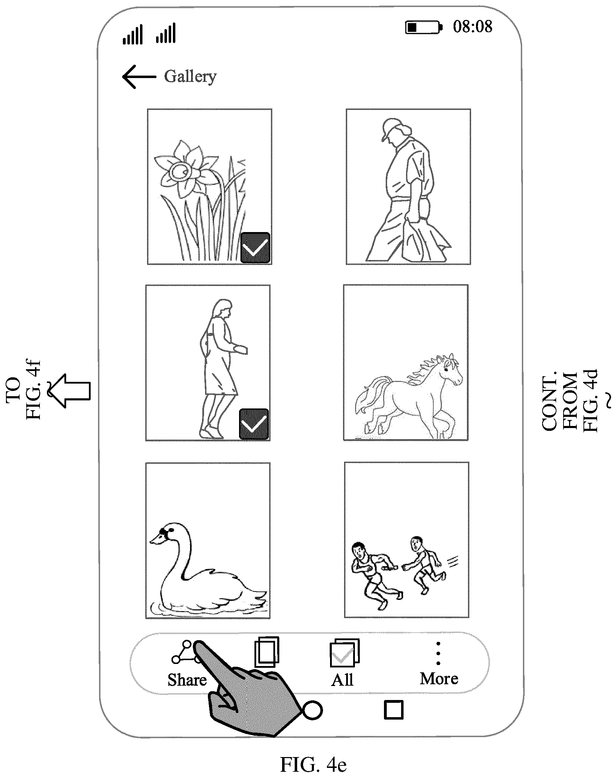

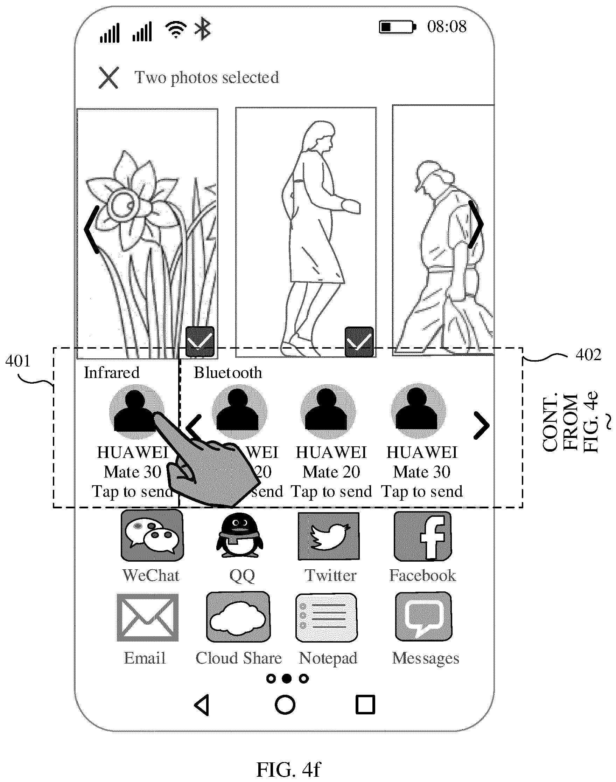

First, the first device 310, the second device 320, and the third devices 330, 340, 350, and 360 each enable the "Moment Share" function. Then, on a user interface shown in FIG. 4a, when a gesture of sliding downward from the top of the first device 310 is detected, in response to the gesture, a user interface of the first device 310 is switched from the user interface shown in FIG. 4a to a user interface shown in FIG. 4b. As shown in FIG. 4b, in an initial state, a "Moment Share" control is in an off state. When detecting an operation on the "Moment Share" control in FIG. 4b (for example, a touch operation on the "Moment Share" control), in response to the operation, the first device 310 enables "Moment Share". "Moment Share" may alternatively be enabled in another manner. For example, the user may enable "Moment Share" when selecting data (such as a photo, a document, or a web page) for sharing. Details are not described herein again. Then, on a user interface shown in FIG. 4c, when detecting an operation on a "Gallery" icon (for example, a tap operation on the "Gallery" icon), the first device enters a user interface shown in FIG. 4d. When it is detected that a photo on the user interface shown in FIG. 4d is selected, a black square embedded with a tick mark is displayed on a lower right corner of the selected photo, and a control bar including a "Share" control is displayed below all photos. In this case, an interface is shown in FIG. 4e. As shown in FIG. 4e, it is detected that two photos are selected. Then, after detecting an operation on the "Share" control (for example, a touch operation on the "Share" control), the first device enters a user interface shown in FIG. 4f. On the user interface shown in FIG. 4f, a second device identifier and third device identifiers are displayed. Specifically, the second device identifier and the third device identifiers are displayed in a first region 401 and a second region 402. The first region 401 displays a device identifier discovered by the first device 310 through infrared, and the second region 402 displays a device identifier discovered by the first device 310 through Bluetooth. Optionally, the first region 401 further displays a word "Infrared" and/or a corresponding icon for identification; and the second region 402 displays a word "Bluetooth" and/or a corresponding icon for identification. Optionally, "Infrared" may alternatively be another word or an abbreviation such as "IF"; and "Bluetooth" may alternatively be another word or an abbreviation such as "BT". Optionally, "Infrared" is located at a specific location in the first region; and "Bluetooth" is located at a specific location in the second region. Optionally, a separation line may be disposed between the first region 401 and the second region 402. The separation line may be a line type such as a dashed line, a solid line, a dash-dot line, or a dash-dot-dot line. The line type is any line type that can be figured out by persons skilled in the art. Alternatively, the first region 401 and the second region 402 may be respectively a first location and a second location. In other words, there is a first location on a first interface of the first device for displaying a device identifier discovered by the first device through infrared; and there is a second location on the first interface of the first device for displaying a device identifier discovered by the first device through Bluetooth. The first location and the second location may be or may not be adjacent. The device identifier discovered by the first device 310 through infrared is a target device identifier. There is at least one target device identifier. Preferably, there is one target device identifier. Certainly, the two regions may alternatively be identified for the user in another manner. For example, at least one of a font type, a font color, a pattern color, a background color, and a font weight of the target device identifier displayed in the first region 401 is different from at least one of a font type, a font color, a pattern color, a background color, and a font weight of a non-target device identifier. In other words, after all the first device, the second device, and the third devices enable "Moment Share", two manners of performing discovering through infrared and performing discovering through Bluetooth are further distinguished in "Moment Share"; and a manner of displaying the device identifier discovered by the first device through infrared is different from a manner of displaying the device identifier discovered by the first device through Bluetooth. It should be noted that "Moment Share" is a function implemented by using an application. The two discovery manners of performing discovering through Bluetooth and performing discovering through infrared that are included in "Moment Share" are not simply establishing a connection through only infrared or Bluetooth when "Moment Share" is not enabled, but are performing further subdivision based on specific discovery in "Moment Share" on a premise of "Moment Share" discovery.

Alternatively, the first region 401 does not display a device identifier, or displays only one device identifier, or displays a plurality of device identifiers. Preferably, the first region 401 does not display a device identifier, or displays only one device identifier. Specifically, within a specific angle range of an orientation of the first device 310, if no device exists, the first region 401 is empty and displays no device identifier, and the second region 402 displays the identifiers of the second device 320 and the third devices 330, 340, 350, and 360. For example, in FIG. 4f, because a width of the second region 402 is limited, only three device identifiers can be displayed at the same time. The foregoing three device identifiers are merely examples for description, and are not used to limit a quantity of device identifiers that can be displayed in the second region. In this case, another device identifier may be displayed by touching a left arrow control and a right arrow control disposed on two sides of the second region 402. In addition, within the specific angle range of the orientation of the first device 310, if the second device 320 exists, the first region 401 displays the identifier of the second device 320, and the second region 402 displays the identifiers of the third devices 330, 340, 350, and 360; or the second region 402 displays all the identifiers of the second device 320 and the third devices 330, 340, 350, and 360. In addition, within the specific angle range of the orientation of the first device 310, if there are more than two devices, in some embodiments, the first region 401 displays more than two of the foregoing device identifiers, and the second region 402 displays the other device identifies; or the second region 402 displays all the device identifiers. In some embodiments, the first region 401 displays an identifier of a device that is closest to the first device 310 in more than two of the foregoing devices, or the first region 401 displays an identifier of a device with a strongest infrared feedback signal that is received by the first device 310; and the second region 402 displays the other device identifiers, or the second region 402 displays all the device identifiers. Optionally, within the specific angle range of the orientation of the first device 310, if no device exists, the first region 401 may further display "None", or a synonym of "None", or another national language text corresponding to "None".

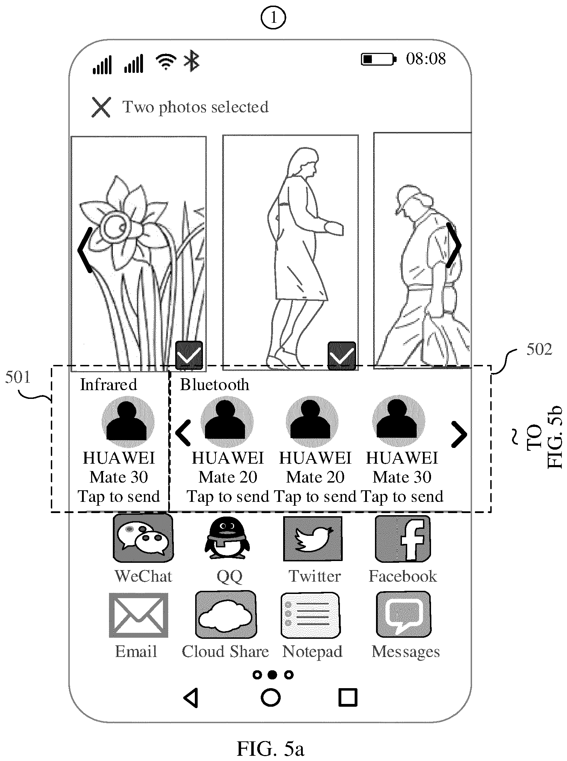

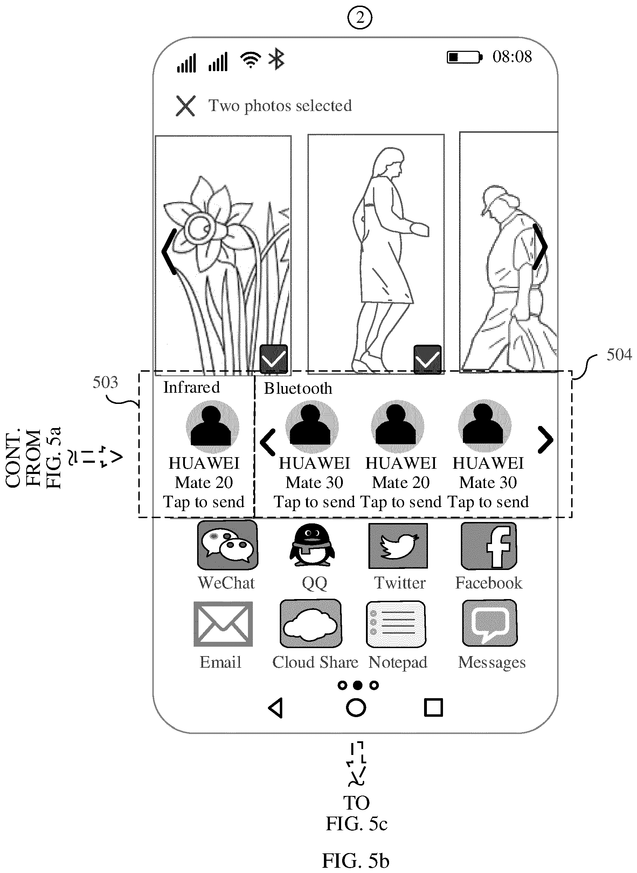

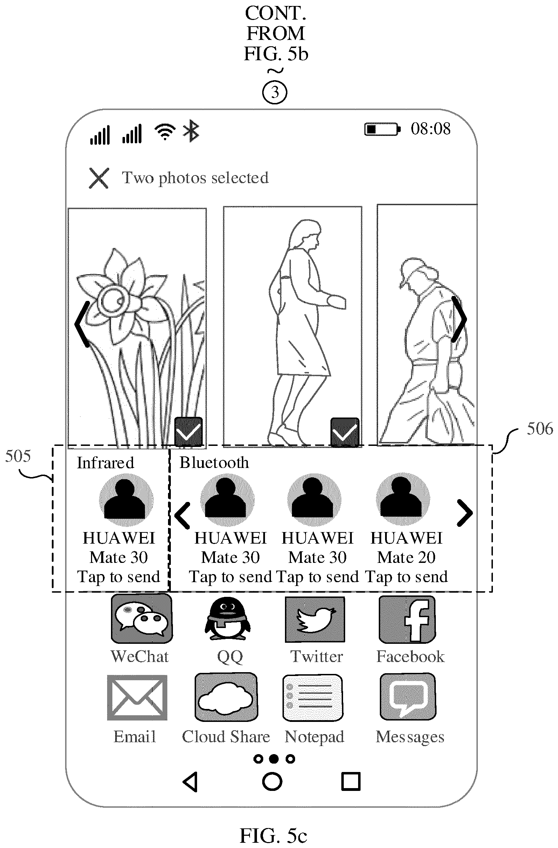

Further description is provided with reference to FIG. 3 and FIG. 5a to FIG. 5c. When the first device 310 is located at a location □ in FIG. 3, a user interface of the first device 310 is shown in FIG. 5a. When the first device 310 is located at a location □ in FIG. 3, a user interface of the first device 310 is shown in FIG. 5b. When the first device 310 is located at a location □ in FIG. 3, a user interface of the first device 310 is shown in FIG. 5c. When the first device 310 is located at the location □ in FIG. 3, an orientation of the first device 310 is a first direction. The second device 320 is located in the first direction. The third devices 330, 340, 350, and 360 are located in another direction. Because infrared has a directional feature, the identifier "HUAWEI Mate 30" of the second device 320 is displayed in a first region 501 in FIG. 5a, and the identifier "HUAWEI Mate 20" of the third device 330, the identifier "HUAWEI Mate 20" of the third device 340, and the identifier "HUAWEI Mate 30" of the third device 350 are displayed in a second region 502 in FIG. 5a. Because a width of the second region 502 is limited, the identifier of the third device 360 is not displayed in the second region 502. The identifier "HUAWEI Mate 30" of the third device 360 may be displayed by touching a left arrow control and a right arrow control that are disposed on two sides of the second region. When the first device 310 is located at the location □ in FIG. 3, an orientation of the first device 310 is a second direction. The third device 330 is located in the second direction. The second device 320 and the third devices 340, 350, and 360 are located in another direction. Similarly, the identifier "HUAWEI Mate 20" of the third device 330 is displayed in a first region 503 in FIG. 5b, and the identifier "HUAWEI Mate 30" of the second device 320, the identifier "HUAWEI Mate 20" of the third device 340, and the identifier "HUAWEI Mate 30" of the third device 350 are displayed in a second region 504 in FIG. 5b. Because a width of the second region 502 is limited, the identifier of the third device 360 is not displayed in the second region 502. The identifier "HUAWEI Mate 30" of the third device 360 may be displayed by touching a left arrow control and a right arrow control that are disposed on two sides of the second region. When the first device 310 is located at the location □ in FIG. 3, an orientation of the first device 310 is a third direction. The third device 350 is located in the third direction. The second device 320 and the third devices 330, 340, and 360 are located in another direction. Similarly, the identifier "HUAWEI Mate 30" of the third device 350 is displayed in a first region 505 in FIG. 5c, and the identifier "HUAWEI Mate 30" of the third device 360, the identifier "HUAWEI Mate 30" of the second device 320, and the identifier "HUAWEI Mate 20" of the third device 330 are displayed in a second region 506 in FIG. 5c. Because a width of the second region 502 is limited, the identifier of the third device 340 is not displayed in the second region 502. The identifier "HUAWEI Mate 20" of the third device 340 may be displayed by touching a left arrow control and a right arrow control that are disposed on two sides of the second region. In this way, after the first device 310 enables "Moment Share", when the user 301 needs to send data to a specific user, the user only needs to make the first device 310 face towards a device of the specific user, so that an identifier of the device of the specific user is displayed in the first region of the first device 310, and the user 301 can quickly determine the target device, thereby implementing quick data sending. In the technical solution provided in this embodiment of this application, the target device is not confused when device identifiers are the same or similar, thereby facilitating an operation and improving user experience.

The photos in "Gallery" are merely examples, and do not limit the scope of embodiments of this application. For example, a scenario in which the user 301 sends a photo may further include that the user 301 sends a photo in an application such as "Browser". In addition, the foregoing photo is merely an example of a type of data. Other data types such as a video, audio, a document, and a compressed package that can be figured out by persons skilled in the art may be data types for sending.

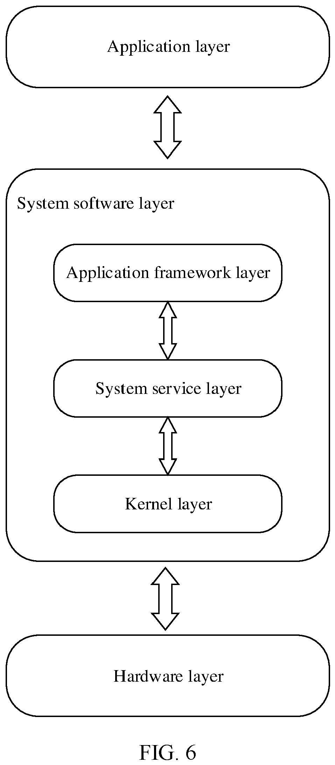

FIG. 6 is a schematic diagram of a software architecture of a data sending method according to an embodiment of this application. As shown in FIG. 6, the method runs at an application layer. A lower layer of the application layer is a system software layer. A lower layer of the system software layer is a hardware layer. The system software layer includes an application framework layer, a system service layer, and a kernel layer. The application layer transmits data and/or a command to or receives data and/or a command from the hardware layer through the application framework layer, the system service layer, and the kernel layer. A hardware driver is integrated into the kernel layer.

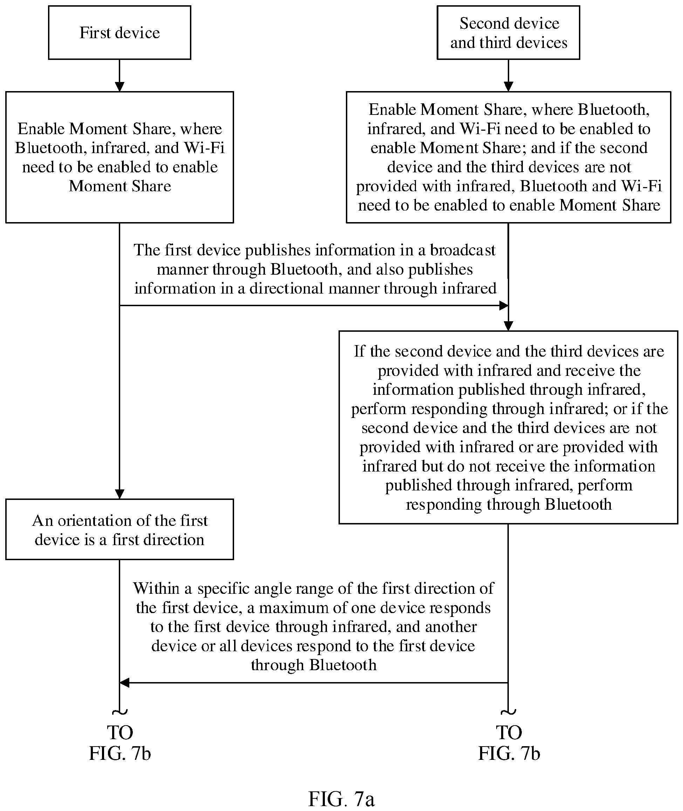

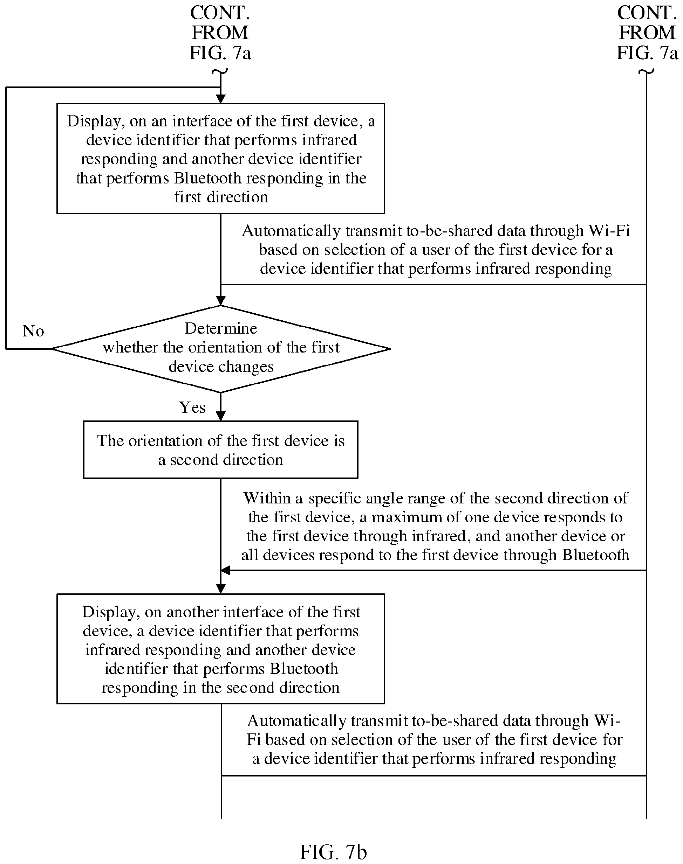

FIG. 7a and FIG. 7b are a schematic flowchart of a data sending method according to an embodiment of this application. To describe procedure steps shown in FIG. 7a and FIG. 7b more clearly and accurately, the following describes FIG. 7a and FIG. 7b with reference to FIG. 3 and FIG. 5a to FIG. 5c. The first device 310 is provided with infrared, Bluetooth, Wi-Fi, and "Moment Share". The second device 320 and the third devices 330, 340, 350, and 360 each are provided with at least Bluetooth, Wi-Fi, and "Moment Share". Optionally, any one of the second device 320 and the third devices 330, 340, 350, and 360 may be provided with infrared, or may not be provided with infrared. For example, all the second device 320 and the third devices 330, 340, 350, and 360 are provided with infrared. The second device 320 and the third devices 330, 340, 350, and 360 are located around the first device 310. There is no obstruction between the first device 310 and any one or some of the second device 320 and the third devices 330, 340, 350, and 360. For ease of description, the following uses an example in which there is no obstruction.

As shown in FIG. 7a and FIG. 7b, first, all the first device 310, the second device 320, and the third devices 330, 340, 350, and 360 enable "Moment Share". With reference to FIG. 3, when the first device 310, the second device 320, and the third devices 330, 340, 350, and 360 enable "Moment Share", infrared, Bluetooth, and Wi-Fi are automatically enabled synchronously. In some embodiments, a dialog box pops up before "Moment Share" is enabled, to notify whether to agree to enable all of infrared, Bluetooth, and Wi-Fi for enabling "Moment Share". If yes, "Moment Share" is enabled. If no, "Moment Share" is not enabled. In some embodiments, no dialog box pops up before "Moment Share" is enabled. In other words, the user is not queried whether to agree to enable all of infrared, Bluetooth, and Wi-Fi. When it is detected that "Moment Share" is enabled, infrared, Bluetooth, and Wi-Fi are automatically enabled synchronously. If one of the third devices is not provided with infrared, when the third device enables "Moment Share", only Bluetooth and Wi-Fi are enabled synchronously.

Next, after all the first device 310, the second device 320, and the third devices 330, 340, 350, and 360 enable "Moment Share", the first device 310 publishes information in a broadcast manner through Bluetooth, and also publishes information in a directional manner through infrared. Because infrared has a directional feature, only a device that is provided with infrared and that is located within a specific angle range of an orientation of the first device 310 can receive the foregoing information published through infrared. Because all the second device 320 and the third devices 330, 340, 350, and 360 are located around the first device 310, all the second device 320 and the third devices 330, 340, 350, and 360 can receive the foregoing information published in the Bluetooth manner through Bluetooth. Therefore, the device that is provided with infrared and that is located within the specific angle range of the orientation of the first device 310 can also receive, through Bluetooth, the foregoing information published through Bluetooth. Optionally, in the second device and the third devices, if a device that is provided with infrared is located within the specific angle range of the orientation of the first device 310, the device feeds back a response signal to the first device 310 through infrared instead of feeding back a response signal to the first device 310 through Bluetooth, and another device feeds back a response signal to the first device 310 through Bluetooth. Optionally, the device may alternatively feed back a response signal to the first device 310 through Bluetooth. In other words, in some embodiments, a device may feed back a response signal to the first device 310 only through infrared. In some embodiments, a device may feed back a response signal to the first device 310 through infrared, or may feed back a response signal to the first device 310 through Bluetooth. For example, if the third device 340 that is provided with infrared is located within the specific angle range of the orientation of the first device 310, the third device 340 may feed back a response signal to the first device 310 through infrared, or may feed back a response signal to the first device 310 through Bluetooth. Correspondingly, on one interface of the first device 310, the identifier of the third device 340 may be displayed only at a first location for displaying a target device identifier such as the first region 501, and the identifier of the third device 340 is not displayed at a second location such as the second region 502; or the identifier of the third device 340 may be displayed at a first location for displaying a target device identifier such as the first region 501, or the identifier of the third device 340 is displayed at the second location such as the second region 502.

In this case, an orientation of the first device 310 is a first direction. In some embodiments, within a specific angle range of the first direction, at least one device responds to the first device 310 through infrared, and another device or all devices respond to the first device 310 through Bluetooth. Optionally, in some embodiments, within a specific angle range of the first direction, a maximum of one device responds to the first device 310 through infrared, and another device or all devices respond to the first device 310 through Bluetooth. For example, within the specific angle range of the first direction, both the third device 330 and the third device 340 receive the information published by the first device 310 through infrared, and both respond to the first device 310 through infrared. Strength of an infrared feedback signal received by the first device 310 from the third device 330 is stronger than strength of an infrared feedback signal received by the first device 310 from the third device 340. Therefore, the first region 501 displays the identifier of the third device 330.

If no device is located within the specific angle range of the first direction, and correspondingly no device responds to the first device 310 through infrared, the first region 501 displays no device identifier. If a device is located within the specific angle range of the first direction, but the device is not provided with infrared, the device does not respond to the first device 310 through infrared either. In addition, because infrared has the directional feature, there is no obstruction between the first device 310 and the second device 320 and between the first device 310 and any one of the third devices 330, 340, 350, and 360. Otherwise, even if a device is provided with infrared and is within the specific angle range of the first direction, because there is an obstruction between the first device 310 and the device, the device cannot receive the information published through infrared.

With reference to FIG. 3, when the first device 310 is located at the location □ in FIG. 3, an orientation of the first device 310 is the first direction. Within the specific angle range of the first direction, the second device 320 is provided with infrared, and responds to the first device 310 through infrared. The third devices 330, 340, 350, and 360 each respond to the first device 310 through Bluetooth.

Device identifiers are displayed on one interface of the first device 310 shown in FIG. 5a. The device identifiers are displayed in the first region 501 and the second region 502. The identifier of the second device 320 is displayed in the first region 501. The identifiers of the third devices 330, 340, and 350 are displayed in the second region 502. The identifier of the third device 360 may be displayed by touching the left arrow control and the right arrow control disposed on the two sides of the second region 502. In this case, only the identifier of the second device 320 is displayed in the first region 501. In some cases, no device identifier is displayed in the first region 501. The foregoing cases include but are not limited to a case in which no device is located within the specific angle range of the first direction and a case in which a device is located within the specific angle range of the first direction but the device is not provided with infrared. In other words, a maximum of one device identifier is displayed in the first region 501. In some embodiments, at least one device identifier is displayed in the first region 501, and the user selects, by touching one device identifier in the device identifiers displayed in the first region 501, the identifier of a device to which data is to be sent. In addition, a location of the first region 501 in FIG. 5a is merely an example, and is not intended to limit the scope of this embodiment of this application. Optionally, locations of the first region 501 and the second region 502 may be exchanged. Optionally, the first region 501 and the second region 502 may be in an up-and-down location relationship. The first region 501 may be located above or below the second region 502. Optionally, the first region 501 and the second region 502 may not be adjacent, and are separately disposed at different locations of the interface shown in FIG. 5a. Optionally, shapes of the first region 501 and the second region 502 are not limited to the shapes shown in FIG. 5a. The first region 501 and the second region 502 each may be in another shape such as a triangle, a circle, a heart shape, or a circular ring shape. The another shape is any shape that can be figured out by persons skilled in the art. Optionally, the location of the first region 501 on the first interface is fixed. Optionally, the identifier of any one of the second device 320 and the third devices 330, 340, 350, and 360 can be displayed in only the first region 501 or the second region 502. For example, if the identifier of the second device 320 is displayed in the first region 501, the identifier of the second device cannot be displayed in the second region 502. In this way, when the user 301 of the first device 310 expects to quickly send data to the second device 320, the user only needs to make the first device 310 face towards the second device 320, so that the user 301 of the first device 310 can quickly position the identifier of the second device 320 by using the first region of the first device 310. Next, based on selection of the user 301 of the first device 310 for a device identifier that performs infrared responding, to-be-sent data is automatically transmitted through Wi-Fi. Specifically, based on a touch operation performed by the user 301 of the first device 310 on the identifier of the second device 320 in the first region 501 and an operation that the user 302 of the second device 320 accepts or agrees with the selection, the first device 310 automatically transmits the to-be-sent data to the second device 320 through Wi-Fi. Optionally, in a specific condition, for example, if a login account of the first device 310 is the same as a login account of the second device 320, or a login account of the first device 310 and a login account of the second device 320 correspond to a same user, or a corresponding user relationship is a family member relationship, or a corresponding user relationship is a close friend relationship, based on the touch operation performed by the user 301 of the first device 310 on the identifier of the second device 320 in the first region 501, the first device 310 automatically transmits the to-be-sent data to the second device 320 through Wi-Fi.

Then, it is determined whether the orientation of the first device 310 changes. If the orientation of the first device 310 does not change, the first device returns to the previous step shown in FIG. 7a and FIG. 7b. If the orientation of the first device 310 changes, a changed orientation of the first device 310 is the second direction. For example, when the first device 310 is located at the location □ in FIG. 3, the orientation of the first device 310 is the second direction. Similar to the step performed after the orientation of the first device 310 is the first direction, within a specific angle range of the second direction, the third device 330 provided with infrared responds to the first device 310 through infrared, and the second device 320 and the third devices 340, 350, and 360 respond to the first device 310 through Bluetooth. Optionally, the second device 320 and the third devices 330, 340, 350, and 360 each respond to the first device 310 through Bluetooth. Device identifiers are displayed on another interface of the first device 310 shown in FIG. 5b. The device identifiers are displayed in the first region 503 and the second region 504. The identifier of the third device 330 is displayed in the first region 503. The identifiers of the second device 320 and the third devices 340 and 350 are displayed in the second region 504. The identifier of the third device 360 may be displayed by touching the left arrow control and the right arrow control disposed on the two sides of the second region 504. In this case, only the identifier of the third device 330 is displayed in the first region 503. In some cases, no device identifier is displayed in the first region 503. The foregoing cases include but are not limited to a case in which no device is located within the specific angle range of the second direction and a case in which a device is located within the specific angle range of the second direction but the device is not provided with infrared. In other words, a maximum of one device identifier is displayed in the first region 503. In some embodiments, at least one device identifier is displayed in the first region 503, and the user selects, by touching one device identifier in the device identifiers displayed in the first region 503, the identifier of a device to which data is to be sent. In addition, a location of the first region 503 in FIG. 5b is merely an example, and is not intended to limit the scope of this embodiment of this application. Similarly, locations and shapes of the first region 503 and the second region 504 in FIG. 5b are changed in a same manner as the locations and the shapes of the first region 501 and the second region 502 in FIG. 5a. Details are not described herein again. In this way, when the user 301 of the first device 310 expects to quickly send data to a device such as the third device 330, the user only needs to make the first device 310 face towards the third device 330, so that the user 301 of the first device 310 can quickly position, by using the first region 503 of the first device 310, the identifier of the third device 330 to which the data is expected to be sent. Next, based on selection of the user 301 of the first device 310 for a device identifier that performs infrared responding and an operation that the user 303 of the third device 330 accepts or agrees with the selection, the to-be-sent data is automatically transmitted through Wi-Fi. Optionally, in a specific condition, for example, if a login account of the first device 310 is the same as a login account of the third device 330, or a login account of the first device 310 and a login account of the third device 330 correspond to a same user, or a corresponding user relationship is a family member relationship, or a corresponding user relationship is a close friend relationship, based on the touch operation performed by the user 301 of the first device 310 on the identifier of the third device 330 in the first region 503, the first device 310 automatically transmits the to-be-sent data to the third device 330 through Wi-Fi.

Then, based on the foregoing steps, it may be further determined whether the orientation of the first device 310 changes. If the orientation of the first device 310 does not change, the first device returns to the previous step shown in FIG. 7a and FIG. 7b. If the orientation of the first device 310 changes, a changed orientation of the first device 310 is the third direction. For example, when the first device 310 is located at the location □ in FIG. 3, the orientation of the first device 310 is the third direction. Similar to the step performed after the orientation of the first device 310 is the second direction, within a specific angle range of the third direction, the third device 350 provided with infrared responds to the first device 310 through infrared, and the second device 320 and the third devices 330, 340, and 360 respond to the first device 310 through Bluetooth. Device identifiers are displayed on a second interface of the first device 310 shown in FIG. 5b. The device identifiers are displayed in the first region 505 and the second region 506. The identifier of the third device 350 is displayed in the first region 505. The identifiers of the third device 360, the second device 320, and the third device 330 are displayed in the second region 506. The identifier of the third device 340 may be displayed by touching the left arrow control and the right arrow control disposed on the two sides of the second region 506. In this case, only the identifier of the third device 350 is displayed in the first region 505. In some cases, no device identifier is displayed in the first region 505. The foregoing cases include but are not limited to a case in which no device is located within the specific angle range of the third direction, and a case in which a device is located within the specific angle range of the third direction but the device is not provided with infrared. In other words, a maximum of one second device identifier is displayed in the first region 505. In some embodiments, at least one device identifier is displayed in the first region 505, and the user selects, by touching one device identifier in the device identifiers displayed in the first region 505, the identifier of a device to which data is to be sent. In addition, a location of the first region 505 in FIG. 5c is merely an example, and is not intended to limit the scope of this embodiment of this application. Similarly, locations and shapes of the first region 505 and the second region 506 in FIG. 5c are changed in a same manner as the locations and the shapes of the first region 503 and the second region 504 in FIG. 5b. Details are not described herein again.

In this way, when the user 301 of the first device 310 expects to quickly send data to the third device 350, the user only needs to make the first device 310 face towards the third device 350, so that the user 301 of the first device 310 can quickly position, by using the first region of the first device 310, the identifier of the third device 350 to which the data is expected to be sent.

Next, based on selection of the user 301 of the first device 310 for a device identifier that performs infrared responding and an operation that the user 305 of the third device 350 accepts or agrees with the selection, the first device 310 automatically sends the to-be-shared data to the third device 350 through Wi-Fi. Optionally, in a specific condition, for example, if a login account of the first device 310 is the same as a login account of the third device 350, or a login account of the first device 310 and a login account of the third device 330 correspond to a same user, or a corresponding user relationship is a family member relationship, or a corresponding user relationship is a close friend relationship, based on the touch operation performed by the user 301 of the first device 310 on the identifier of the third device 350 in the first region 505, the first device 310 automatically transmits the to-be-shared data to the third device 350 through Wi-Fi.

Then, based on the foregoing steps, it may be further determined whether the orientation of the first device 310 changes. Subsequent steps are similar to the foregoing steps. Details are not described herein again.

Optionally, a location of the first region on the first interface may not be fixed. The location of the first region changes with the orientation of the first device. However, the first region is highlighted.

Optionally, even if the location of the first region on the first interface is fixed, the first region may also be highlighted.

Optionally, the location of the first region on the first interface is not fixed, but a location of the first region relative to the second region is fixed. In other words, the first region and the second region remain a relatively fixed location relationship.

Any one of the foregoing cases is intended to enable a maximum of one second device identifier that performs infrared responding to be quickly identified by the user of the first device on the first interface of the first device.

When no second device performs infrared responding, no identifier of the second device around the first device is displayed in the first region. In this way, the user can quickly learn that no second device performs infrared responding around the first device. In this case, the user may alternatively select an identifier of an expected second device around the first device by using the second region, to quickly send data.

Optionally, the first region and the second region may be respectively a first location and a second location.

It should be noted that, unless otherwise specified, that the first device and/or the second device are/is provided with infrared means that the first device and/or the second device are/is provided with an infrared transmitter and an infrared receiver, or are/is provided with an infrared transceiver.

Optionally, the first device and the second device each may be a portable mobile device further including another function such as a personal digital assistant and/or a music player function, for example, a mobile phone, a tablet computer, or a wearable mobile device (such as a smartwatch or a smart band) having a wireless communication function. The portable mobile device may alternatively be another portable mobile device, for example, a laptop (Laptop) having a touch-sensitive surface or a touch panel. It should be further understood that, in some other embodiments, the mobile device may alternatively not be a portable mobile device, but a desktop computer having a touch-sensitive surface or a touch panel.

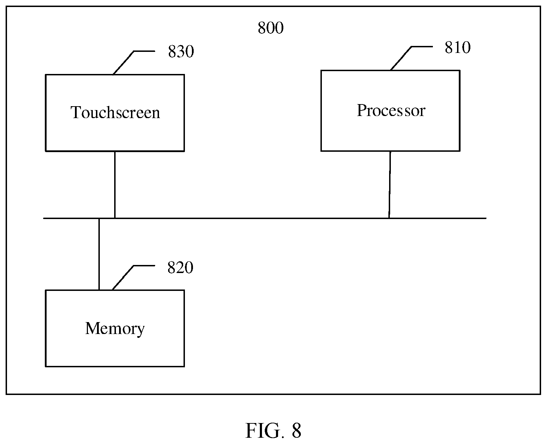

FIG. 8 shows a mobile device 800 according to this application. For example, the mobile device 800 includes at least one processor 810, a memory 820, and a touchscreen 830. The processor 810 is coupled to the memory 820 and the touchscreen 830. The coupling in this embodiment of this application may be a communication connection, an electronic connection, or another form. Specifically, the memory 820 is configured to store program instructions. The touchscreen 830 is configured to display a user interface. The processor 810 is configured to invoke the program instructions stored in the memory 820, so that the mobile device 800 performs the steps performed by the mobile device 800 in the data sending method for conveniently positioning a target device provided in this embodiment of this application. It should be understood that the mobile device 800 may be configured to implement the data sending method for conveniently positioning a target device provided in this embodiment of this application. For related features, refer to the foregoing descriptions. Details are not described herein again.

This application provides a computer program product including instructions. When the computer program product runs on a mobile device, the mobile device is enabled to perform the steps performed by the mobile device in the data sending method for conveniently positioning a target device provided in this embodiment of this application.

This application provides a computer-readable storage medium, including instructions. When the instructions are run on a mobile device, the mobile device is enabled to perform the steps performed by the mobile device in the data sending method for conveniently positioning a target device provided in this embodiment of this application.

Persons skilled in the art may clearly understand that embodiments of this application may be implemented by hardware, or by hardware and software. When hardware and software are used for implementation, the foregoing functions may be stored in the computer-readable medium. Based on such an understanding, the technical solutions of embodiments of this application essentially, or the part contributing to the conventional technology, or all or some of the technical solutions may be implemented in a form of a software product. The computer software product is stored in a storage medium, and includes several instructions to enable a computer device (which may be a personal computer, a server, a network device, or the like) to perform all or some of the steps of the method described in embodiments of this application. The storage medium includes any medium that can store program code, such as a USB flash drive, a removable hard disk, a read-only memory, a random access memory, a magnetic disk, or a compact disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A data sending method, wherein the method is applied to a first device and the method comprises:
enabling, by the first device, a sharing function;
establishing, by the first device, a wireless connection to a second device at least through infrared;
establishing, by the first device, a wireless connection to a third device at least through Bluetooth;
displaying a plurality of objects on a first interface of the first device, wherein the object comprises at least one of a document, a photo, a folder, a video file, an audio file, an application, or text content;
displaying, by the first device, a second interface when detecting a first input for a first object in the plurality of objects, wherein the second interface comprises a mark indicating that the first object is selected and a plurality of options that comprise at least a sharing option;
displaying, by the first device, a third interface when detecting a second input for the sharing option, wherein the third interface comprises a sharing target display region, the sharing target display region comprises two types of display regions, a first type of display region is used to display a device identifier that remains an infrared connection to the first device, and a second type of display region is used to display a device identifier that remains a Bluetooth connection to the first device; and
sending, by the first device, the first object to the second device when the first device detects a third input for a first device identifier in the first type of display region.

2. The method according to claim 1, wherein the sending, by the first device, the first object to the second device comprises: sending, by the first device, the first object to the second device through Wi-Fi.

3. The method according to claim 1, wherein a display manner of the first type of display region is different from a display manner of the second type of display region, and an area of the second type of display region is greater than an area of the first type of display region.

4. The method according to any one of claims 1 to 3, wherein after the first device rotates by a specific angle, the first device faces towards the third device, content in the first type of display region is updated, and content in the second type of display region is updated; and the first device establishes a wireless connection to the third device through infrared, and the first device establishes a wireless connection to the second device through Bluetooth.

5. The method according to claim 4, wherein that content in the first type of display region is updated, and content in the second type of display region is updated comprises:
the first type of display region displays an identifier of the third device but does not display an identifier of the second device; and
the second type of display region displays the identifier of the second device.

6. The method according to any one of claims 1 to 3, wherein after the first device rotates by a specific angle, the first device faces towards the third device, content in the first type of display region is updated, and content in the second type of display region remains unchanged; and the first device establishes a wireless connection to the third device through infrared, and the first device separately remains a wireless connection to the second device and the third device through Bluetooth.

7. The method according to claim 6, wherein that content in the first type of display region is updated, and content in the second type of display region remains unchanged comprises:
the first type of display region displays an identifier of the third device but does not display an identifier of the second device; and
the second type of display region displays the identifier of the second device and the identifier of the third device.

8. The method according to any one of claims 1 to 7, wherein after the first device enables the sharing function, the first device automatically enables infrared, Bluetooth, and Wi-Fi.

9. A mobile device, comprising at least a memory, a touchscreen, one or more processors, and one or more computer programs, wherein the one or more computer programs are stored in the memory, and when the one or more processors execute the one or more computer programs, the mobile device is enabled to implement the data sending method according to any one of claims 1 to 8.

10. A computer-readable storage medium, comprising instructions, wherein when the instructions are run on the mobile device according to claim 9, the mobile device is enabled to perform the data sending method according to any one of claims 1 to 8.
